# EUROPEAN PATENT SPECIFICATION

(11) **EP 3 000 517 B1**
(45) Date of publication and mention of the grant of the patent: **03.01.2018**
(21) Application number: 15186083.0
(22) Date of filing: 21.09.2015
(51) Int. Cl.: B01D 29/11, B01D 29/33, B01D 29/64, B01D 29/68

(54) **SELF-CLEANING FILTER**
SELBSTREINIGENDES FILTER
FILTRE AUTONETTOYANT

(30) Priority: 19.09.2014 IT MI20141620; 19.09.2014 IT MI20141617
(43) Date of publication of application: 30.03.2016
(73) Proprietor: Sati S.r.l., 47023 San Carlo di Cesena (FC) (IT)
(72) Inventor: CENDRON, Nicola, 47023 Cesena FC (IT)
(74) Representative: Perani & Partners S.p.A.

(56) References cited:
- EP-A2- 0 164 932
- WO-A1-90/03833
- WO-A1-2006/021510
- WO-A1-2011/112151
- US-A- 5 554 284
- US-A1- 2014 021 125

## Description

The present invention relates to a self-cleaning filter.

Self-cleaning filters are known in the art and are disclosed, for instance, in US 2009/050582, EP 2767321 and US 2014/021125.

Prior art self-cleaning filters comprise a liquid suction port, a liquid delivery port, a tubular filter element for filtering the liquid that flows from the liquid suction port to the liquid delivery port and a plurality of suction nozzles radially and rotatably arranged within the tubular filter element in longitudinally spaced relationship, and having suctions pads proximate to the filtering surface of the tubular filter element.

In US 2014/021125, the suction pads are fixed to a rotating central suction duct by means of respective rigid support rods. This configuration is inefficient if the surface of the tubular filter element is irregular or large impurities have to be filtered off. In this case, the suction pads are not able to optimally conform with the surface of the tubular filter element and cannot effectively clean the filtering surface of the filter.

WO 2011/112151 also discloses suction pads fixed to a rotating central suction pipe by means of respective rigid support rods.

WO 2006/021510 provides a suction duct with an elbow connector attached to a secondary duct having a suction pad sliding thereon with an elastic spacer interposed therebetween. Such elastic spacer has the purpose of both pressing the suction pad against the inner surface of the filter mesh and preventing deposition of dirt upon the secondary duct. In this arrangement, the suction pad can only move in the axial direction of the secondary duct, due to the compression and axial elongation of the elastic spacer. Nevertheless, this will provide unsatisfactory results wit very large dirt particles. Furthermore, this arrangement cannot conform with the irregularities of the inner surface of the filter mesh if the latter has not a perfectly circular profile.

The object of the present invention is to provide a self-cleaning filter that can obviate the drawbacks of the prior art.

In accordance with the present invention, this object is fulfilled by a self-cleaning filter as defined in claim 1.

The characteristics and advantages of the present invention will appear from the following detailed description of one practical embodiment, which is illustrated without limitation in the annexed drawings, in which:

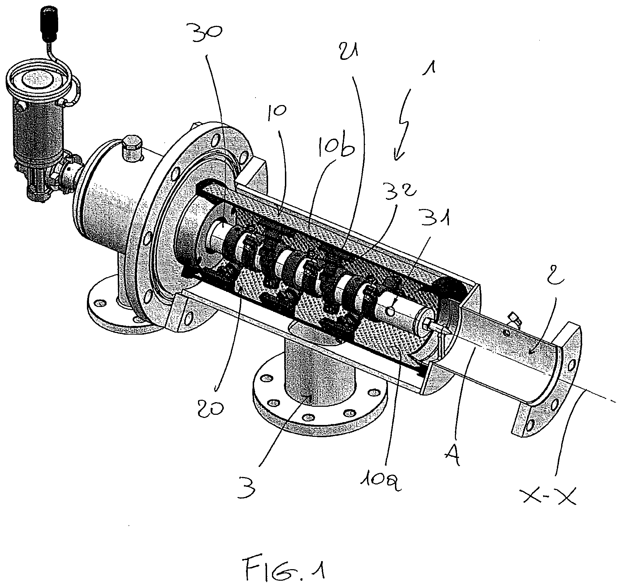

- Figure 1 shows a perspective view of the self-cleaning filter, according to one embodiment of the present invention,

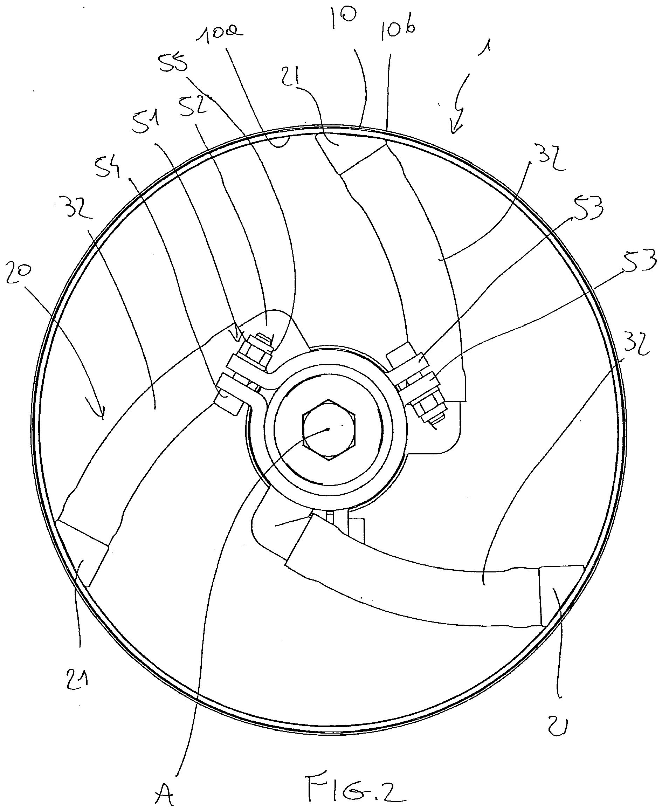

- Figure 2 shows a front view of the filter of Figure 1,

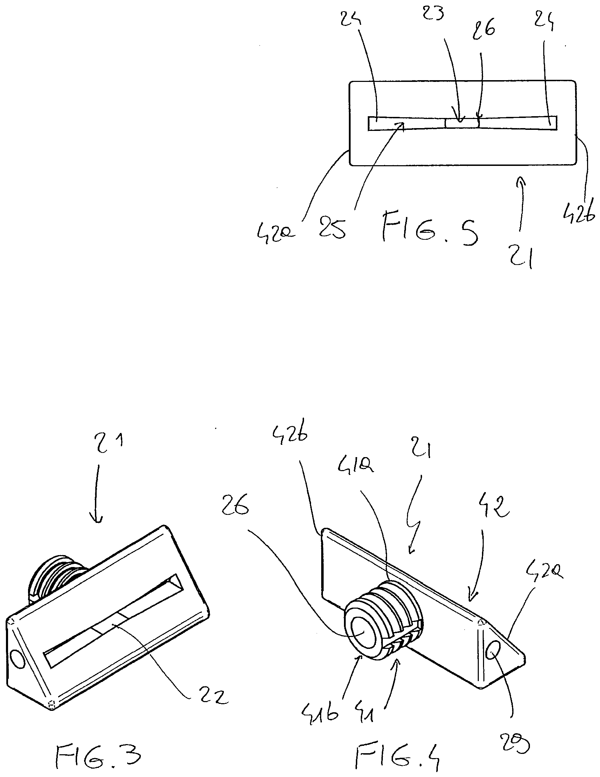

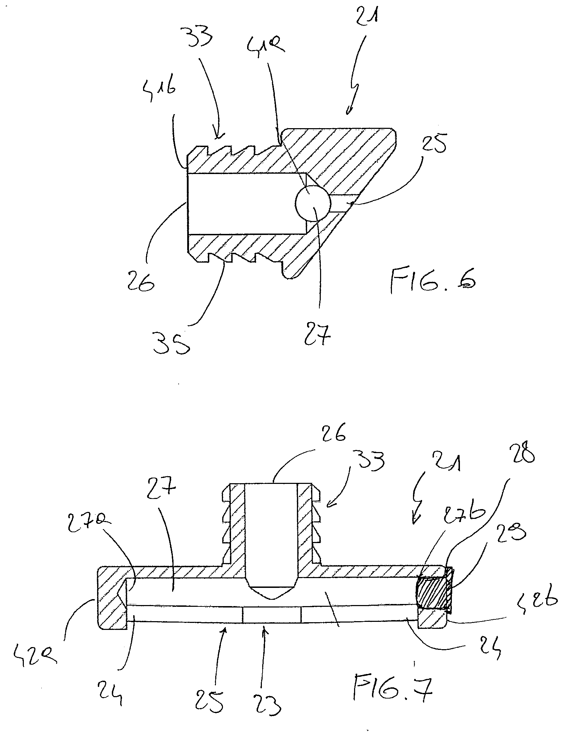

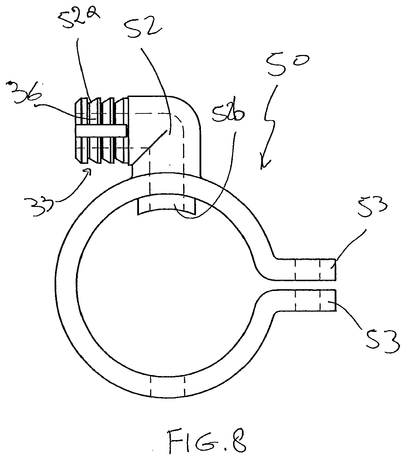

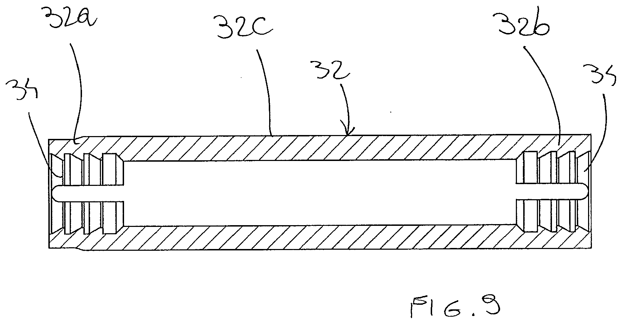

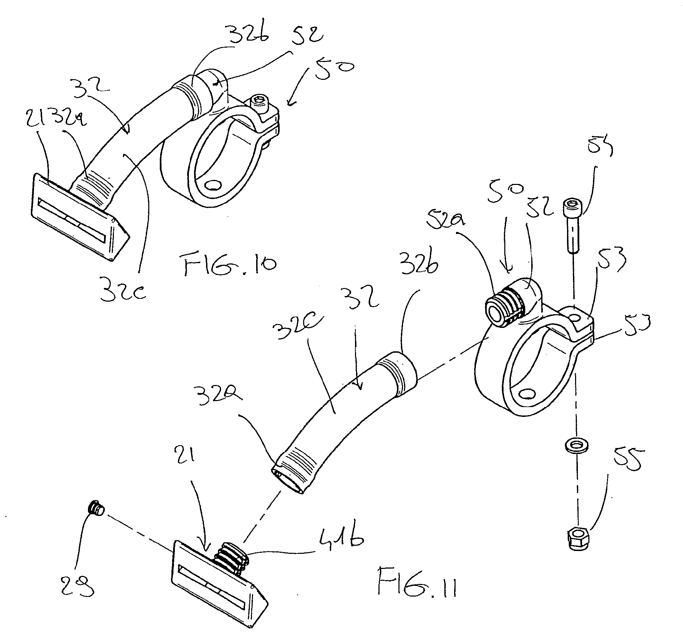

- Figures 3-11 show views of certain elements of the filter of Figure 1.

Referring to the annexed figures, numeral 10 generally designates a self-cleaning filter in accordance with an embodiment of the present invention.

The self-cleaning filter comprises a liquid suction port 2, a liquid delivery port 3 and a tubular filter element 10, which is configured to filter the liquid that flows from the liquid suction port 2 to the liquid delivery port 3.

The tubular filter element 10 extends in a longitudinal direction X-X. In this example, the tubular filter element 10 has a circular section with an axis A extending in the longitudinal direction X-X.

The tubular filter element 10 has a filtering surface 10a, here defined by the inner surface, and an opposite surface 10b.

In accordance with a preferred embodiment, the tubular filter element 10 is defined by a filter mesh.

The self-cleaning filter 1 comprises a plurality of radially arranged suction nozzles 20 rotating relative to the tubular filter element 10 and spaced from each other in the longitudinal direction X-X. Particularly, the suction nozzles 20 are arranged to rotate about an axis of rotation extending in the longitudinal direction X-X, and preferably coaxial with the axis A.

Reference will be made hereinafter without limitation to the embodiment as shown in the figures, in which the suction nozzles 20 are arranged inside the tubular filter element 10.

Advantageously, the suction nozzles 20 are arranged in angularly spaced relationship. Particularly, two suction nozzles 20 arranged side by side in the longitudinal direction X-X are spaced at an angle of 120°.

Each suction nozzle 20 comprises a suction pad 21 located in the proximity of the tubular filter element 10, particularly in the proximity of the inner surface 10a of the tubular filter element 10.

The suction pad 21 has a suction port 22 for sucking the impurities filtered by the inner surface 10a of the tubular filter element 10.

The suction port 22 comprises a central portion 23 and two end portions 24 which are joined to the central portion 23 at opposite sides thereof to thereby form a slit, generally referenced 25 extending in the longitudinal direction X-X between the two end portions 24.

According to one embodiment, the suction nozzles 20 are spaced in the longitudinal direction X-X such that, upon rotation of the nozzles 20 about the axis of rotation A, the inner surfaces of the tubular filter element 10 that have been swept by the slits 25 of two adjacent nozzles 20 overlap, and the ratio of the overlapping area to the slit area 25 ranges from 5% to 35%.

The suction pad 21 further comprises a discharge opening 26, preferably disposed in line with the central portion 23.

The suction pad 21 advantageously has a T-shape with a first rod portion 41 and a second head portion 42 arranged transverse to one end 41a of the first rod portion 41. The second portion 42 extends in the longitudinal direction X-X between two ends 42a, 42b and comprises the slit 25, whereas the first portion 41 extends in the direction Y-Y orthogonal to the longitudinal direction X-X from the end 41a to an end 41b, whereat it terminates with the discharge opening 26.

Advantageously, the slit 25 tapers from each end portion 24 toward the central portion 23 in the longitudinal direction X-X. This configuration of the slit 25 affords a uniform suction pressure to be exerted along the entire longitudinal extent of the slit 25.

Particularly, the two end portions 24 and the central portion 23 have respective suction sections s1, s2.

The suction section of the suction port 22 is at its maximum and equal to s1, at the two end portions 24 and at its minimum and equal to s2, at the central portion 23 and advantageously decreases uniformly from s2 to s1, from the end portions 24 toward the central portion 23 in the longitudinal direction X-X.

According to one embodiment, the ratio of the suction section s2 of the central portion 23 to the suction section s1 of the two end portions 24 ranges from 0.5 to 0.8.

Advantageously, the central portion is disposed in a middle position between the two end portions 24.

According to one embodiment, the suction pad 21 comprises an expansion tank 27 disposed between the discharge opening 26 and the suction port 22 for connecting the suction port 22 with the discharge opening 26.

With the expansion tank 27, the suction power may be increased, an additional volume being available between the suction port 22 and the discharge opening 26.

Advantageously, the expansion tank 27 extends in the longitudinal direction X-X between two end portions 27a, 27b located at the ends 42a, 42b of the second portion 42 of the suction pad 21.

In this example, the suction pad 21 has an opening 28 for access to the expansion tank 27. This access opening 28 is closed by a removable plug 29.

Preferably, the expansion tank 27 has a tubular shape, with an axis extending in the longitudinal direction X-X.

The self-cleaning filter 1 further comprises a suction duct 30 disposed within the tubular filter element 10 and configured to rotate relative to the tubular filter element 10, in a direction of rotation (referenced R in the figures), about an axis X that extends in the longitudinal direction X-X.

Preferably, the suction duct 30 has an axis X coaxial with the axis A of the tubular filter element 10.

According to one embodiment, for the suction nozzles 20 to be able to rotate relative to the tubular filter element 10, the suction nozzles 20 are rotatably fixed to the suction duct 30, to rotate relative to the tubular filter element 10 along a circumferential direction in the direction of rotation R of the suction duct 30. Advantageously, the suction nozzles 20 radially project out of the suction duct 30.

Particularly, the suction duct 30 has a plurality of connecting apertures 31, each connecting aperture 31 being connected to a respective suction nozzle 20 through a respective connecting duct 32.

Each connecting duct 32 extends between a first end 32a for connection to the suction nozzle 20 and a second end 32b for connection to the connecting aperture 31 and comprises a central portion 32c extending between the first end 32a and the second end 32b. Advantageously, each connecting duct 32 is at least partially made of an elastic material, preferably an elastomer, and is connected to the suction duct 30 such that the central portion 32c is able to elastically bend relative to the second end 32b at least circumferentially, either in the direction of rotation or in a direction opposite to the direction of rotation.

The elasticity of the connecting duct 32 and the flexibility of the central portion 32c relative to the second end 32b allow the suction pad 21 to move relative to the suction duct 30 and relative to the tubular filter element 10 with many degrees of freedom, such that the suction pad can optimally adhere to the inner surface 10a of the tubular filter element 10 and that the force applied to the suction pad 21 does not damage the tubular filter element 10 and also reduces the wear caused by the wiping motion of the suction pad 21 on the inner surface 10a.

The elasticity of the connecting duct 32 further allows the suction pad 21 to conform with the irregularities of the inner surface 10a of the tubular filter element 10, if the latter has a non-perfectly circular profile, and if very large particles are present.

Furthermore, with this arrangement, the dirt that has been sucked in through the suction pad 21 is conveyed into the connecting duct 32 and all the other parts of the self-cleaning filter 1 are maintained in a clean state.

Even more advantageously, as the central portion 32c elastically bends relative to the second end 32b, the first end 32a and the suction nozzle 20 connected thereto will elastically move at least circumferentially relative to the second end 32b.

According to the invention, the suction duct 30 has a plurality of connecting sleeves 52. Each connecting sleeve 52 is rotatably fixed to the suction duct 30 and is connected at opposite sides to a respective connecting aperture 31 and a respective connecting duct 32. Each connecting sleeve 52 has a sleeve end 52a that is only partially inserted in its respective connecting duct 32 at the second end 32b of the connecting duct 32 and terminates at such second end 32b of the connecting duct 32.

Preferably, each connecting sleeve 52 has a sleeve axis B and the central portion 32c of each connecting duct 32 is able to elastically circumferentially bend relative to the sleeve axis B, either in the direction of rotation or in the direction opposite to the direction of rotation.

According to one embodiment, the end 41b of the suction pad 21 is only partially inserted in its respective connecting duct 32 at the first end 32a of the connecting duct 32 and terminates at such first end 32a of the connecting duct 32.

More advantageously, each connecting duct 32 is entirely made of an elastic material.

According to a preferred embodiment, a collar 50, mounted coaxial with the suction duct 30, is provided for easier connection and fixation of the connecting duct 32 with and to the suction duct 30. The collar 50 comprises a quick-connect mechanism 51 and the connecting sleeve 52 connects each connecting duct 32 with a respective connecting aperture 31.

In this example, the collar 50 is an open ring having two ends designed to be moved toward each other, and the quick-connect mechanism 51 is identified by a fastening assembly composed of a screw 54 and a nut 55 located at the two ends 53 of the open ring, for tightening and loosening the collar 50 on the suction duct 30.

The connecting sleeve 52 has a first end, corresponding to the above mentioned sleeve end 52a, for connection to the connecting duct 32 and a second end 52b for connection to the connecting aperture 31.

According to one embodiment, rotationally restraining members 33 are provided to prevent rotation of each connecting duct 32 relative to its respective sleeve 52 and relative to its respective suction pad 21.

In this example, the rotationally restraining members 33 comprise a plurality of teeth 34 formed at opposite ends of the connecting duct 32, and a plurality of grooves 35 formed in the suction pad 21 and a plurality of grooves 36 formed in the connecting sleeve 52.

The grooves 35 and 36 are configured for connection with respective teeth 34 of the connecting duct 32.

Preferably, a pipe clamp (not shown) may be applied to the exterior of the connecting duct 32 at the connection with the connecting sleeve 52 and with the suction pad 21 for improved fixation effectiveness.

The above disclosure clearly shows that the present invention fulfills the intended objects.

Those skilled in the art will obviously appreciate that a number of changes and variants may be made to the arrangements as described hereinbefore to meet incidental and specific needs.

All of these variants and changes fall within scope of the invention, as defined in the following claims.

## Claims

1. A self-cleaning filter (1) comprising:
- a tubular filter element (10) extending in a longitudinal direction (X-X),
- a plurality of suction nozzles (20) arranged to rotate relative to said tubular filter element (10) and spaced from each other in said longitudinal direction (X-X),
- a suction duct (30) disposed within said tubular filter element (10) and configured to rotate relative to said tubular filter element (10), in a direction of rotation, about an axis (X) extending in said longitudinal direction (X-X),
wherein:
- each suction nozzle (20) comprises a suction pad (21) located in the proximity of said tubular filter element (10),
- said suction pad (21) has a suction port (22) for sucking the impurities filtered by said tubular filter element (10),
- said suction nozzles (20) are rotatably fixed to said suction duct (30), to rotate relative to the tubular filter element (10) along a circumferential direction in the direction of rotation of the suction duct (30),
- said suction duct (30) has a plurality of connecting apertures (31),
- each connecting aperture (31) is connected to a respective suction nozzle (20) through a connecting duct (32),
- each connecting duct (32) extends between a first end (32a) for connection to the suction nozzle (20) and a second end (32b) for connection to the connecting aperture (31) and comprises a central portion (32c) extending between the first end (32a) and the second end (32b),
**characterized in that:**
- said connecting duct (30) has a plurality of connecting sleeves (52), rotatably fixed to the suction duct (30) and connected at opposite sides to respective connecting apertures (31) and respective connecting ducts (32),
- each connecting sleeve (52) has a sleeve end (52a) that is only partially inserted in its respective connecting duct (32) at the second end (32b) of the connecting duct (32) and terminates at said second end (32b) of the connecting duct (32), and
- each connecting duct (32) is made at least partially of an elastic material and is connected to the suction duct (30) such that the central portion (32c) is able to elastically bend relative to the second end (32b) at least along the circumferential direction, either in the direction of rotation or in a direction opposite to the direction of rotation.

2. A self-cleaning filter (1) as claimed in claim 1, wherein:
- each connecting sleeve (52) has a sleeve axis (B),
- the central portion (32c) of each connecting duct (32) is able to elastically bend relative to the sleeve axis (B) along the circumferential direction, either in the direction of rotation or in the direction opposite to the direction of rotation.

3. A self-cleaning filter (1) as claimed in claim 1 or 2, wherein:
- each suction pad (21) has a suction pad end (41b) that is only partially inserted in its respective connecting duct (32) at the first end (32a) of the connecting duct (32) and terminates at said first end (32a) of the connecting duct (32).

4. A self-cleaning filter (1) as claimed in any of claims 1 to 3, wherein rotationally restraining members (33) are provided to prevent rotation of each connecting duct (32) relative to its respective connecting sleeve (52) and relative to its respective suction pad (21).

5. A self-cleaning filter (1) as claimed in claim 4, wherein a collar (50) is provided, which is mounted coaxial with the suction duct (30), said collar (50) comprising a quick-connect mechanism (51) and said connecting sleeve (52).

6. A self-cleaning filter (1) as claimed in claim 5, wherein said rotationally restraining members (33) comprise a plurality of teeth (34) formed at opposite ends of the connecting duct (32), a plurality of grooves (35) formed in the suction pad (21) and a plurality of grooves (36) formed in the connecting sleeve (52) and configured for connection with respective teeth (34) of the connecting duct (32).

7. A self-cleaning filter (1) as claimed in any of claims 1 to 6, wherein each connecting duct (32) is entirely made of an elastic material.

8. A self-cleaning filter (1) as claimed in any of claims 1 to 7, wherein said suction nozzles (20) radially project out of said suction duct (30).

## Patentansprüche

1. Selbstreinigender Filter (1), umfassend:
- ein rohrförmiges Filterelement (10), das sich in einer Längsrichtung (X-X) erstreckt,
- eine Vielzahl von Ansaugdüsen (20), die so angeordnet sind, dass sie sich relativ zu dem röhrenförmigen Filterelement (10) drehen und in der Längsrichtung (X-X) voneinander beabstandet sind,
- einen Saugkanal (30), der in dem röhrenförmigen Filterelement (10) angeordnet und so konfiguriert ist, dass er sich relativ zu dem röhrenförmigen Filterelement (10) in einer Drehrichtung um eine in der Längsrichtung (XX) verlaufende Achse (X) dreht, wobei:
- jede Ansaugdüse (20) eine Saugscheibe (21) aufweist, die in der Nähe des rohrförmigen Filterelements (10) angeordnet ist,
- die Saugscheibe (21) eine Ansaugöffnung (22) zum Ansaugen der von dem röhrenförmigen Filterelement (10) gefilterten Verunreinigungen aufweist,
- die Ansaugdüsen (20) drehbar an dem Saugkanal (30) befestigt sind, um sich relativ zu dem rohrförmigen Filterelement (10) entlang einer Umfangsrichtung in der Drehrichtung des Saugkanals (30) zu drehen,
- der Saugkanal (30) eine Vielzahl von Verbindungsöffnungen (31) aufweist,
- jede Verbindungsöffnung (31) über einen Verbindungskanal (32) mit einer jeweiligen Ansaugdüse (20) verbunden ist,
- jeder Verbindungskanal (32) sich zwischen einem ersten Ende (32a) zur Verbindung mit der Ansaugdüse (20) und einem zweiten Ende (32b) zur Verbindung mit der Verbindungsöffnung (31) erstreckt und einen zentralen Abschnitt (32c) aufweist, der sich zwischen das erste Ende (32a) und das zweite Ende (32b) erstreckt,
**dadurch gekennzeichnet, dass**:
- der Verbindungskanal (32) eine Vielzahl von Verbindungshülsen (52) aufweist, die drehbar an dem Saugkanal (30) befestigt sind und an gegenüberliegenden Seiten mit entsprechenden Verbindungsöffnungen (31) und jeweiligen Verbindungskanälen (32) verbunden sind,
- jede Verbindungshülse (52) ein Hülsenende (52a) hat, das nur teilweise in seinen jeweiligen Verbindungskanal (32) am zweiten Ende (32b) des Verbindungskanals (32) eingeführt ist und an dem zweiten Ende (32b) des Verbindungskanals (32) endet, und
- jeder Verbindungskanal (32) zumindest teilweise aus einem elastischen Material hergestellt wird und so mit dem Saugkanal (30) verbunden ist, dass der Mittelabschnitt (32c) sich relativ zum zweiten Ende (32b) zumindest entlang der Umfangsrichtung, entweder in der Drehrichtung oder in einer zu der Drehrichtung entgegengesetzten Richtung, elastisch biegen kann.

2. Selbstreinigender Filter (1) nach Anspruch 1, wobei
- jede Verbindungshülse (52) eine Hülsenachse (B) aufweist,
- der zentrale Abschnitt (32c) jedes Verbindungskanals (32) sich relativ zur Hülsenachse (B) entlang der Umfangsrichtung, entweder in der Drehrichtung oder in der zu der Drehrichtung entgegengesetzten Richtung, elastisch biegen kann.

3. Selbstreinigender Filter (1) nach Anspruch 1 oder 2, wobei jede Saugscheibe (21) ein Saugscheibenende (41b) hat, das nur teilweise in seinen jeweiligen Verbindungskanal (32) am ersten Ende (32a) des Verbindungskanals (32) eingesetzt ist und am ersten Ende (32a) des Verbindungskanals (32) endet.

4. Selbstreinigender Filter (1) nach einem der Ansprüche 1 bis 3, wobei drehhemmende Elemente (33) vorgesehen sind, um eine Drehung jedes Verbindungskanals (32) relativ zu seiner jeweiligen Verbindungshülse (52) und relativ zu seiner jeweiligen Saugscheibe (21) zu verhindern.

5. Selbstreinigender Filter (1) nach Anspruch 4, **dadurch gekennzeichnet, dass** ein Kragen (50) vorgesehen ist, der koaxial zu dem Saugkanal (30) angeordnet ist, wobei der Kragen (50) einen Schnellverbindungsmechanismus (51) und die Verbindungshülse (52) umfasst.

6. Selbstreinigender Filter (1) nach Anspruch 5, wobei die drehhemmende Elemente (33) folgendes umfassen: eine Vielzahl von Zähnen (34), die an entgegengesetzten Enden des Verbindungskanals (32) ausgebildet sind, eine Vielzahl von Nuten (35), die in der Saugscheibe (21) ausgebildet sind und eine Vielzahl von Nuten (36), die in der Verbindungshülse (52) ausgebildet sind und zur Verbindung mit jeweiligen Zähnen (34) des Verbindungskanals (32) konfiguriert werden.

7. Selbstreinigender Filter (1) nach einem der Ansprüche 1 bis 6, wobei jeder Verbindungskanal (32) vollständig aus einem elastischen Material hergestellt wird.

8. Selbstreinigender Filter (1) nach einem der Ansprüche 1 bis 7, wobei die Ansaugdüsen (20) radial aus dem Saugkanal (30) herausragen.

## Revendications

1. Filtre autonettoyant (1) comprenant :
- un élément filtrant tubulaire (10) s'étendant dans une direction longitudinale (X-X),
- une pluralité de buses d'aspiration (20) disposées pour tourner par rapport audit élément filtrant tubulaire (10) et espacées l'une de l'autre dans ladite direction longitudinale (X-X),
- une conduite d'aspiration (30) disposée à l'intérieur dudit élément filtrant tubulaire (10) et configurée pour tourner par rapport audit élément filtrant tubulaire (10) dans un sens de rotation autour d'un axe (X) s'étendant dans ladite direction longitudinale (XX), dans lequel:
- chaque buse d'aspiration (20) comprend un disque d'aspiration (21) situé à proximité dudit élément filtrant tubulaire (10),
- ledit disque d'aspiration (21) comporte un orifice d'aspiration (22) pour aspirer les impuretés filtrées par ledit élément filtrant tubulaire (10),
- lesdites buses d'aspiration (20) sont fixées de manière rotative audit conduit d'aspiration (30) pour tourner par rapport à l'élément filtrant tubulaire (10) suivant une direction circonférentielle dans le sens de rotation du conduit d'aspiration (30),
- ledit conduit d'aspiration (30) comporte une pluralité d'ouvertures de raccordement (31),
- chaque ouverture de raccordement (31) est reliée à une respective buse d'aspiration (20) à travers un conduit de raccordement (32),
chaque conduit de raccordement (32) s'étend entre une première extrémité (32a) de raccordement à la buse d'aspiration (20) et une deuxième extrémité (32b) de raccordement à l'ouverture de raccordement (31) et comprend une partie centrale (32c) qui s'étend entre la première extrémité (32a) et la seconde extrémité (32b), **caractérisé en ce que** :
- ledit conduit de raccordement (30) comporte une pluralité de manchons de raccordement (52), fixés de manière rotative au conduit d'aspiration (30) et reliés à des côtés opposés aux respectives ouvertures de raccordement (31) et aux respectifs conduits de raccordement (32),
- chaque manchon de raccordement (52) comporte une extrémité du manchon (52a) qui n'est que partiellement insérée dans son respectif conduit de raccordement (32) à la seconde extrémité (32b) du conduit de raccordement (32) et se termine à ladite seconde extrémité (32b) du conduit de raccordement (32), et
- chaque conduit de raccordement (32) est constitué au moins partiellement d'un matériau élastique et est relié au conduit d'aspiration (30) de manière que la partie centrale (32c) puisse se courber élastiquement par rapport à la seconde extrémité (32b) au moins le long de la direction circonférentielle, dans la direction de rotation ou dans la direction opposée à la direction de rotation.

2. Filtre autonettoyant (1) selon la revendication 1, dans lequel :
- chaque manchon de raccordement (52) présente un axe du manchon (B),
- la partie centrale (32c) de chaque conduit de raccordement (32) peut se courber élastiquement par rapport à l'axe du manchon (B) le long de la direction circonférentielle dans la direction de rotation ou dans la direction opposée à la direction de rotation.

3. Filtre autonettoyant (1) selon la revendication 1 ou 2, dans lequel chaque disque d'aspiration (21) comporte une extrémité du disque d'aspiration (41b) qui n'est que partiellement insérée dans son respectif conduit de raccordement (32) à la première extrémité (32a) du conduit de raccordement (32) et se termine à ladite première extrémité (32a) du conduit de raccordement (32).

4. Filtre autonettoyant (1) selon l'une quelconque des revendications 1 à 3, dans lequel des éléments de retenue de rotation (33) sont prévus pour empêcher la rotation de chaque conduit de raccordement (32) par rapport à son respectif manchon de raccordement et à son respectif disque d'aspiration (21).

5. Filtre autonettoyant (1) selon la revendication 4, dans lequel est prévu un collier (50) qui est monté coaxial au conduit d'aspiration (30), ledit collier (50) comprenant un mécanisme de connexion rapide (51) et ledit manchon de raccordement (52).

6. Filtre autonettoyant (1) selon la revendication 5, dans lequel lesdits éléments de retenue de rotation (33) comprennent une pluralité de dents (34) formées aux extrémités opposées du conduit de connexion (32), une pluralité de rainures (35) formées dans la disque d'aspiration (21) et une pluralité de rainures (36) formées dans le manchon de raccordement (52) et configurées pour la connexion avec des respectives dents (34) du conduit de raccordement (32).

7. Filtre autonettoyant (1) selon l'une quelconque des revendications 1 à 6, dans lequel chaque conduit de raccordement (32) est entièrement constitué d'un matériau élastique.

8. Filtre autonettoyant (1) selon l'une quelconque des revendications 1 à 7, dans lequel lesdites buses d'aspiration (20) font saillie radialement vers l'extérieur dudit conduit d'aspiration (30).
